# EUROPÄISCHE PATENTSCHRIFT

(11) **EP 3 977 335 B1**
(45) Veröffentlichungstag und Bekanntmachung des Hinweises auf die Patenterteilung: **28.02.2024**
(21) Anmeldenummer: 20729982.7
(22) Anmeldetag: 27.05.2020
(51) Int. Cl.: G06K 5/00, G07D 7/0043, G07D 7/0047, G07D 7/2033, H04W 12/06, H04W 12/77, G06K 7/10

(54) **AUGMENTED REALITY ANIMATION**
AUGMENTED REALITY ANIMATION
ANIMATION À RÉALITÉ AUGMENTÉE

(30) Priorität: 28.05.2019 DE 102019207855
(43) Veröffentlichungstag der Anmeldung: 06.04.2022
(73) Patentinhaber: SCRIBOS GmbH, 69126 Heidelberg (DE)
(72) Erfinder: BORGSMÜLLER, Stefan, 69126 Heidelberg (DE); SCHEIBENSTOCK, Steffen, 70178 Stuttgart (DE)
(74) Vertreter: Zinsinger, Norbert
(86) Internationale Anmeldenummer: PCT/EP2020/064712
(87) Internationale Veröffentlichungsnummer: WO 2020/239840

(56) Entgegenhaltungen:
- WO-A1-2012/136138
- WO-A1-2018/111858
- CN-B- 102 663 592
- US-A1- 2012 269 402
- US-A1- 2016 026 626
- US-A1- 2016 321 531
- US-A1- 2017 091 505

## Beschreibung

Die Erfindung betrifft ein Authentifizierungsverfahren eines Sicherheitsmerkmals.

Zur Verbesserung der Überprüfung von Sicherheitsmerkmalen durch Endkonsumenten wird versucht, den Endkonsumenten beispielsweise durch Animationen zu schulen. Die Animationen können wie in der US 2012/0269402 A2 das betrachtungswinkelabhängige Aussehen von OVDs vermitteln.

Nachteilig daran ist es, dass OVDs je nach Beleuchtung und Winkel unterschiedlich aussehen. So ist es für den Betrachter nicht leicht zu erkennen, ob das präsentierte OVD eine Fälschung ist oder ob nur die Beleuchtungsbedingungen nicht optimal sind und somit ein anderes Erscheinungsbild hervorrufen.

Im Stand der Technik gibt es Vorschläge zur Authentifizierung von Objekten zur Darstellung einer erweiterten Realität (augmented reality AR). Hierbei geht es darum, Objekte zu erkennen, um bestimmte Inhalte mittels AR zu diesem Objekt darstellen zu können. Die US 8814048 B2 schlägt einen maschinenlesbaren Identifier zur Authentifizierung des Objektes vor. Die US 10045001 B2 schlägt einen SmartTag zur Authentifizierung des Objektes vor.

In der DE 10 2014 108 578 A1 ist ein Verfahren zur Prüfung von Sicherheitsdokumenten offenbart, bei dem dem Benutzer mittels AR eine Animation eines OVD eingeblendet wird. Das Verfahren wendet sich an Experten. In diesem Fall handelt es sich bei den Experten um geschulte Grenzwächter. Nachteilig daran ist, dass diese Art der Prüfung durch Endkonsumenten im Produktschutz nur beschränkt wirksam ist. Zwar kann AR dem Benutzer vermitteln, wo auf der Verpackung das OVD angeordnet sein soll. Da der nicht geschulte Endkonsument aber meist Fälschungen, die mit wenig Aufwand produziert werden, nicht sicher von Originalen unterscheiden kann, ist der Einsatzbereich im Produktschutz eingeschränkt.

Aus der US 2016/321531 A1 ist beispielsweise ein Authentifizierungssystem mit einem Bildmuster und einem vom Menschen lesbaren Datensatz bekannt.

Aus der US 2012/269402 A1 ist beispielsweise ein Authentifizierungsgerät zur Authentifizierung eines Sicherheitsmerkmals bekannt.

Aus der US 2017/091505 A1 ist beispielsweise ein System zur Authentifizierung von Produkten mittels 2D-Barcodes bekannt.

Es ist daher Aufgabe der Erfindung, ein Authentifizierungsverfahren eines Sicherheitsmerkmals vorzuschlagen, das auch für nicht geschulte Endkonsumenten im Produktschutz einsetzbar ist und einen verbesserten Produktschutz ermöglicht.

Die Aufgabe wird durch ein eingangs genanntes Authentifizierungsverfahren mit den Merkmalen des Anspruchs 1 gelöst.

Das Authentifizierungsverfahren wird auf ein Sicherheitsmerkmal aus einer Serie von Sicherheitsmerkmalen mit jeweils einem maschinenlesbaren ersten Element mit einem ersten Code, der in der Serie von Sicherheitsmerkmalen jeweils als einzigartig gewählt wird, und einem optisch variablen zweiten Element mit einem für einen Benutzer lesbaren zweiten Code angewendet. Hierbei ist der Begriff des Codes weit zu verstehen. Es kann sich um eine Zeichenfolge handeln, um eine Seriennummer, einen Zahlen-/Buchstabencode, eine Mischung davon oder auch um einen Zeichencode. Der Code kann beispielsweise als Barcode, z. B. als QR-Code oder Datamatrix-Code dargestellt werden.

Die Sicherheitsmerkmale der Serie sind vorzugsweise gleichartig. Die ersten Elemente sind gleichartig und können daher mit demselben Lesegerät gelesen werden. Die gelesenen und entschlüsselten ersten Elemente liefern den ersten Code. Die ersten Codes sind gleichartig, und die zweiten Codes sind ebenfalls gleichartig. Sie weisen jeweils einen gleichen Aufbau auf wie eine gleichlange Seriennummer o. Ä.

Der erste Code ist einzigartig innerhalb der Serie. Der zweite Code kann vielfältig in der Serie sein. Vielfältig bedeutet im Sinne dieser Erfindung, dass durchaus zwei gleiche zweite Codes in der Serie vorhanden sein können, die Häufigkeit gleicher Codes in der Serie jedoch sehr gering ist. Zwei gleiche zweite Codes können vorzugswiese in kleiner als 0,1 %, besonders bevorzugt in kleiner als 0,0001 % der Fälle auftreten. In einer weiteren Ausführungsform ist auch der zweite Code einzigartig innerhalb der Serie.

Der erste Code ist vorzugsweise ein Barcode, besonders bevorzugst eine OR-Code oder ein Data Matrix Code.

Es wird ein mobiles Endgerät, beispielsweise ein Smartphone oder eine Datenbrille, mit einer Kamera, einem Bildschirm und einer Recheneinheit verwendet. Das Verfahren ist auf handelsüblichen Smartphones ausführbar, darauf aber nicht beschränkt.

Das maschinenlesbare Element und das optisch variable Element werden mit der Kamera des Endgeräts erfasst. Das von der Kamera aufgenommene Sicherheitsmerkmal wird vorzugsweise in Form eines Livestreams auf dem Bildschirm dargestellt. Die Recheneinheit ermittelt aus dem maschinenlesbaren Element den ersten Code, beispielsweise durch Lesen des Barcodes, und ordnet dem ersten Code einen zweiten Code zu.

Auf dem Bildschirm wird eine Ansicht einer erweiterten Realität, einer sogenannten Augmented Reality, des Sicherheitsmerkmals dargestellt, das eine Animation des zweiten optisch variablen Elementes mit dem zweiten zugeordneten lesbaren Code umfasst, die mit dem zweiten lesbaren Code des eingescannten optisch variablen Elementes durch den Endbenutzer verglichen werden kann. Dadurch wird die Authentizität des Sicherheitsmerkmals ermittelt.

Optisch variable Elemente werden auch als OVDs (optical variable devices) bezeichnet. Üblicherweise versehen Produzenten von Originalprodukten ihre Produkte oder deren Verpackungen mit Sicherheitsmerkmalen. Solche Sicherheitsmerkmale können auch OVDs enthalten. OVDs haben üblicherweise eine betrachtungs- und/oder beleuchtungswinkelabhängige Erscheinung. Sie sind daher nur mit sehr großem Aufwand herzustellen oder zu kopieren. Zu den OVDs gehören beispielsweise Hologramme, Beugungsgitter, Kippfarben, Mikrolinsen, Mikrolinsenarrays, z. B. in Form von Moiré-Magnifiern.

Die auf dem Bildschirm eines mobilen Endgerätes, wie z. B. ein Smartphone, dargestellte Ansicht einer erweiterten Realität des aufgenommenen Sicherheitsmerkmals wird auch als Augmented Reality (AR) bezeichnet.

Unter der Augmented Reality versteht man gemäß Wikipedia die computergestützte Erweiterung der Realitätswahrnehmung. Die Information kann grundsätzlich alle menschlichen Sinnesmodalitäten ansprechen, häufig wird unter erweiterter Realität nur die visuelle Darstellung von Informationen verstanden, also die Ergänzung von Bildern oder Videos mit computergenerierter Zusatzinformation oder virtuellen Objekten mittels Einblendung oder Überlagerung.

Grundsätzlich können bei der Augmented Reality Informationen nicht nur in Bilder, Videos, sondern auch in einen mit dem Smartphone eingescannten Livestream eingeblendet werden.

Vorzugsweise wird auf dem Bildschirm ein Livestream des Sicherheitsmerkmals mit maschinenlesbarem und optisch variablem Element erzeugt, und es wird eine relative Position des optisch variablen Elementes gegenüber dem mobilen Endgerät durch die Relativposition des maschinenlesbaren Elementes gegenüber dem mobilen Endgerät ermittelt. Dabei wird davon Gebrauch gemacht, dass der maschinenlesbare Code wie auch das OVD auf dem Produkt oder der Produktverpackung eine feste Position haben. Die Position des maschinenlesbaren Elementes kann mit Hilfe eines entsprechenden Readers bestimmt werden. Üblicherweise handelt es sich bei den maschinenlesbaren Elementen um 1D- oder 2D-Barcodes, um QR-Codes oder andere Codes, für die entsprechende Reader existieren. Die Reader können anhand der Ausgestaltung der Codes die Lage des maschinenlesbaren Elementes gegenüber der Kamera bzw. dem mobilen Endgerät ermitteln. Nach der Ermittlung der relativen Position wird das maschinenlesbare Element mit dem Reader gelesen. Da die Position des OVD gegenüber dem maschinenlesbaren Element feststeht, ist über die Ermittlung der Position des maschinenlesbaren Elementes relativ zum mobilen Endgerät auch die Position des optisch variablen Elementes bestimmbar.

Vorzugsweise sind die ersten und zweiten Seriennummern in einer Datenbank abgelegt und werden einander zugeordnet, und die Recheneinheit greift auf die Daten der Datenbank zu.

Nachdem das maschinenlesbare Element mit der Kamera in das Endgerät eingelesen wurde und dort als bestehendes Foto oder als Livestream auf dem Bildschirm dargestellt wird oder in anderer Weise verarbeitet wird, wird das maschinenlesbare Element mit Hilfe des Readers entschlüsselt und der erste Code ermittelt. Die Recheneinheit vergleicht den ersten Code mit den Codes, die beispielsweise in einer Datenbank abgelegt sind, und ermittelt den zugehörenden zweiten Code. Der zugeordnete zweite Code wird als Teil einer Animation des zweiten Elementes in der erweiterten Realität auf dem Bildschirm dargestellt. Für den Benutzer ist es nun leicht möglich, den auf dem Bildschirm animierten zugeordneten Code mit dem auf dem Produkt oder dessen Verpackung tatsächlich vorhandenen lesbaren zweiten Code zu vergleichen. Bei Identität des lesbaren zweiten Codes mit dem zugeordneten zweiten Code liegt eher keine Produktfälschung vor. Bei einem Abweichen der beiden zweiten Codes voneinander liegt mit großer Wahrscheinlichkeit eine Produktfälschung vor.

Besonders bevorzugt weist das mobile Endgerät eine Eingabeeinrichtung auf, mit der eine Identität des zweiten lesbaren Codes und des zweiten zugeordneten Codes bejaht oder verneint wird.

Bei der Eingabeeinrichtung handelt es sich vorzugsweise um einen Touchscreen, auf dem eine Frage, wie z. B.: "Siehst Du auf dem Produkt folgenden Code?", erscheint, und dann wird der zugeordnete zweite Code eingeblendet, und die Frage kann dann über Berühren des Touchscreens bejaht oder verneint werden. Alternativ kann die Frage mittels Gesten- oder Sprachsteuerung bejaht oder verneint werden.

Günstigerweise ist das mobile Endgerät ständig oder zeitweise mit dem Internet verbunden. Die Antworten auf die Frage werden in Echtzeit oder nachdem sie vorübergehend auf dem mobilen Endgerät gespeichert werden an einen zentralen Server übermittelt, auf den der Produzent des Produktes Zugriff hat, der dann die Antworten auf die Fragen auswerten kann, um beispielsweise beim Auftreten von Produktfälschungen das entsprechende Ladengeschäft informieren zu können.

Produktfälschungen können auch vorliegen, wenn ein erster Code an verschiedenen Orten eingescannt wird oder zu häufig eingescannt wird. Im ersten Fall kann ein Fälschungshinweis, im zweiten Fall ein Warnhinweis in der Augmented Reality animiert werden.

Eine Internetverbindung kann auch genutzt werden, damit die Recheneinheit des mobilen Endgerätes auf die auf dem zentralen Server abgelegte Datenbank zugreifen kann. Alternativ kann die Datenbank auch in einem Speicher des mobilen Endgerätes abgelegt sein.

Eine weitere Möglichkeit der Zuordnung des ersten Codes zum zweiten Code könnte auch in einem vorzugsweise kryptographischen Rechenverfahren liegen, wobei dann ein Rechenalgorithmus auf dem mobilen Endgerät abgelegt ist, der aus dem ersten Code den zweiten Code rechnerisch ermittelt.

Vorzugsweise ist der zweite Code in die physische Ausgestaltung des OVD integriert. So kann beispielsweise in das OVD ein Beugungsgitter in Form der zweiten Seriennummer eingeformt sein. Es ist auch denkbar, dass in das OVD Hologramme in Form des zweiten Codes eingeformt werden. Die OVDs sind an sich schon sehr fälschungssicher; durch den zusätzlichen Abgleich des in das OVD integrierten lesbaren Codes mit dem durch das obengenannte Verfahren zugeordneten zweiten Code wird eine deutlich erhöhte zusätzliche Sicherheit geschaffen.

Die OVDs können laserlithographisch erzeugt werden, wobei das laserlithographische Verfahren günstigerweise eine Auflösung von 1.200 dpi, vorzugsweise von 5.000 dpi aufweist, vorzugsweise von 15.000 dpi aufweist.

Vorzugsweise wird eine Lichtquelle am mobilen Endgerät angeordnet und die Lichtquelle zur Beleuchtung des lesbaren zweiten Codes in der OVD eingeschaltet. Die Lichtquelle ermöglicht es, eine konstante und bestimmbare Beleuchtung des OVD zu gewährleisten, so dass eine günstigerweise im Rahmen der Augmented Reality erzeugte Animation erklärende Hinweise beispielsweise zum Kippverhalten des OVD aufweisen kann und somit dieses Kippverhalten auch ziemlich zuverlässig nachprüfbar ist.

In einer bevorzugten Ausführungsform ist der zweite Code bei diffuser Raumbeleuchtung nicht sichtbar oder kaum sichtbar und wird erst bei Einschalten einer Punktlichtquelle, wie sie beispielsweise die LED eines Smartphones darstellt, sichtbar. Dies ist z. B. möglich, wenn es sich bei dem OVD um ein computergeneriertes Fourier- oder Fresnelhologramm handelt.

Vorzugsweise sind die Sicherheitsmerkmale als Sicherheitsetikett ausgebildet. Das maschinenlesbare Element wie auch das optisch variable Element können zusammen auf einem Etikett auf das Produkt oder die Verpackung des Produktes aufgeklebt werden. Dabei wird in der Regel eine Klebverbindung gewählt, die es nicht gestattet, das Sicherheitsetikett wieder schadfrei von dem Produkt oder der Produktverpackung zu lösen.

Selbst wenn es einem Fälscher gelingt, ein OVD herzustellen, das der Endverbraucher nicht vom Original unterscheiden kann, könnte er nur ihm bekannte individuelle Produkte fälschen, da er die Codes, insbesondere den zweiten Code, von ihm nicht bekannten individuellen Produkten nicht kennt und somit keine gültigen Kombinationen aus erstem und zweitem Code erzeugen kann. Der Aufwand, um eine Serie von Fälschungen zu erzeugen, wird also deutlich erhöht, da der Fälscher zunächst alle Codepaare ermitteln muss. Die Anzahl der Codepaare, die der Fälscher kennen kann, ist begrenzt. Wenn größere Serien von Fälschungen angeboten werden, müssen sich Codekombinationen wiederholen. Wenn das mobile Endgerät auf die Datenbank zugreifen kann, können die Codes, die zu oft geprüft werden, auf eine sogenannte schwarze Liste gesetzt werden und somit als Fälschung erkannt werden.

Des Weiteren beruht die höhere Sicherheit des erfindungsgemäßen Verfahrens gegenüber dem Stand der Technik darauf, dass die Authentifizierung mittels Augmented Reality für den Endkonsumenten deutlich leichter und sicherer durchgeführt werden kann als ohne Augmented Reality. Mittels Augmented Reality kann dem Endkonsumenten genau vermittelt werden, wie das Produkt oder die Produktverpackung aussieht und an welcher Stelle das OVD angeordnet ist, wie groß das OVD ist, welche Code das OVD tragen soll und welchen optischen winkelabhängigen Effekt das OVD zeigen soll. Durch diese leichte und sichere Prüfung wird die Sicherheit des Authentifizierungsverfahrens nochmals erhöht.

Üblicherweise wird eine Vielzahl von Sicherheitsmerkmalen, insbesondere Sicherheitsetiketten, einer Produktserie mit jeweils einzigartigen ersten Codes versehen.

Der erste Code kann eine Seriennummer sein. Beispielsweise werden die Produkte einer Produktserie durchnummeriert. Der zweite Code kann ebenfalls eine Seriennummer sein.

Günstigerweise werden die Sicherheitsmerkmale mit einem einzigartigen zweiten Code versehen, der in dem OVD integriert ist und wobei der erste Code und der zweite Code einander zugeordnet sind und die Zuordnung vorzugsweise in einer Datenbank durch Ablegen von Codepaaren erfolgt oder durch Berechnungen in einem kryptographischen Rechenverfahren.

In einer Weiterentwicklung des Authentifizierungsverfahrens ermittelt das Endgerät mittels der Kamera eine Beleuchtungssituation einer Umgebung, um die Animation an die Beleuchtungssituation der Umgebung anzupassen. Dadurch wird die Animation leichter lesbar.

Günstigerweise wird die Animation abhängig von einem Betrachtungswinkel zwischen Endgerät und optisch variablem Element dargestellt.

Zur leichten Prüfung wird das Ergebnis der Authentifizierung in der Augmented Reality Anwendung dargestellt.

Vorzugsweise werden in der Augmented Reality Anwendung produktspezifische Informationen, Bonusprogramme und/oder Gewinnspiele dargestellt.

Die Informationen, Bonusprogramme und/oder Gewinnspiele können abhängig von der individuellen Seriennummer des Produkts ausgestaltet werden.

Die Erfindung wird anhand eines Ausführungsbeispiels in neun Figuren beschrieben. Dabei zeigen:
- Figur 1a bis 1d: vier verschiedene Verpackungen eines Produktes mit jeweils einem auf der Verpackung aufgebrachten, erfindungsgemäßen Sicherheitsetikett und jeweils einer Vergrößerung des Sicherheitsetikettes,
- Fig. 2: einen Livestream eines Produktes auf dem Display eines Smartphones,
- Fig. 3: eine Darstellung des Produktes in einer Augmented-Reality-Anwendung mit dem Sicherheitsetikett und einer berechneten Animation des Sicherheitsetikettes,
- Fig. 4: eine Darstellung der Fig. 3 mit gedrehtem Smartphone,
- Fig. 5: eine Darstellung der Figur 3 und der Figur 4 in einer gedrehten und gekippten Stellung des Smartphones,
- Fig. 6: einen Livestream des Produktes mit einer Augmented-Reality-Sicherheitsabfrage zur Übereinstimmung des animierten Sicherheitsetikettes und des gestreamten Sicherheitsetikettes.

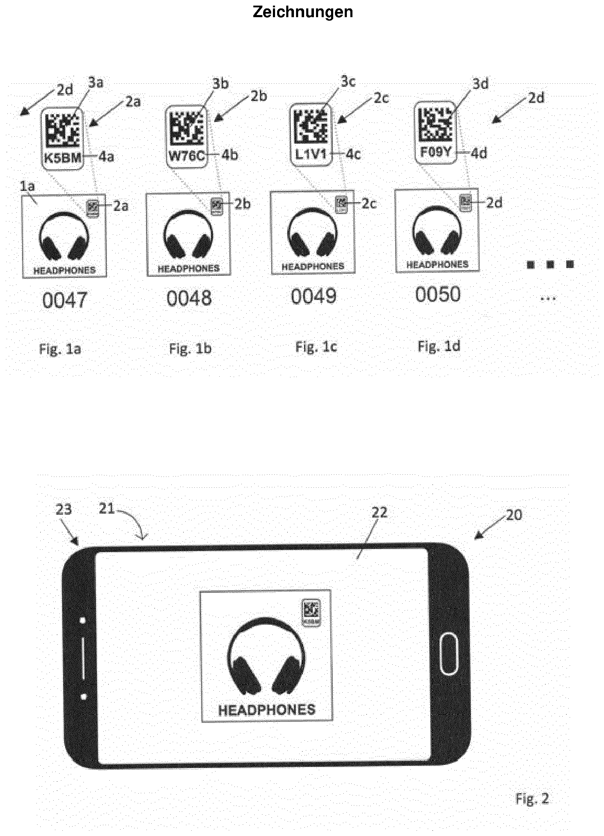

In den Figuren 1a, 1b, 1c und 1d ist jeweils eine Verpackung 1a, 1b, 1c, 1d eines Kopfhörers dargestellt, auf jeder der Verpackungen 1a, 1b, 1c, 1d ist ein Sicherheitsetikett 2a, 2b, 2c, 2d aufgebracht. Jedes der Sicherheitsetiketten 2a, 2b, 2c, 2d umfasst ein maschinenlesbares Element 3a, 3b, 3c, 3d und ein optisch variables Element 4a, 4b, 4c, 4d, das jeweils eine zweite, für den Benutzer einfach lesbare Seriennummer umfasst. Bei dem maschinenlesbaren Element 3a, 3b, 3c, 3d handelt es sich jeweils um einen 2D-Barcode, es können aber auch andere Codes, beispielsweise 1D-Barcodes, QR-Codes oder sonstige maschinenlesbare Codes Verwendung finden. Das erste maschinenlesbare Element 3a, 3b, 3c, 3d kodiert in diesem Ausführungsbeispiel eine Seriennummer: in der Figur 1a die Zahl 0047, in der Figur 1b die Zahl 0048, in der Figur 1c die Zahl 0049, in der Figur 1d die Zahl 0050. Die Seriennummer nummeriert die Produkte beziehungsweise die Produktverpackungen einer Serie durch. Es sind natürlich auch andere Nummerierungen denkbar. Dies sind insbesondere Zufallsnummerierungen. Oft werden Zufallsnummerierungen in einem sehr großen Zahlenraum verwendet, so dass ein Fälscher Seriennummern nicht erraten kann bzw. das Erraten einer gültigen Seriennummer sehr unwahrscheinlich ist.

Neben dem maschinenlesbaren Element 3a, 3b, 3c, 3d ist jeweils das optisch variable Element 4a, 4b, 4c, 4d, ein sogenanntes OVD angeordnet. OVD steht für optical variable device. In dieser Patentanmeldung wird OVD auch als optisch variables Element 4a, 4b, 4c, 4d bezeichnet. Bei den optisch variablen Elementen 4a, 4b, 4c, 4d handelt es sich um Sicherheitsmerkmale, die nur mit großem Aufwand herzustellen und damit auch schwierig zu kopieren sind. Die OVDs 4a, 4b, 4c, 4d können Hologramme oder Beugungsgitter enthalten, sie können Kippfarbenanordnungen oder Mikrolinsenarrays umfassen. OVDs haben meist ein betrachtungs- bzw. beleuchtungswinkelabhängiges Aussehen.

In den Figuren 1a bis 1d sind in die OVDs 4a, 4b, 4c, 4d für den Nutzer lesbare zweite Codes in Form von Buchstaben-Zahlencodes eingeformt. Die Buchstaben-Zahlencodes sind mit der Struktur der OVDs 4a, 4b, 4c, 4d verknüpft, beispielsweise ist der Buchstaben-Zahlencode dadurch ausgebildet, dass das OVD 4a, 4b, 4c, 4d Beugungsgitter umfasst, die die Form des Buchstaben-Zahlencodes aufweisen, oder die OVD 4a, 4b, 4c, 4d enthält eine Kippfarbenanordnung in der Weise, dass bei der Betrachtung der OVD 4a, 4b, 4c, 4d aus bestimmten Winkeln der Buchstaben-Zahlencode in einer anderen Farbe erscheint als die Umgebung des Buchstaben-Zahlencodes. Ebenso kann der Buchstaben-Zahlencode als Rekonstruktion eines Hologramms bei Betrachtung aus bestimmten Winkeln erscheinen. Derartige Rekonstruktionen können auch bei Beleuchtung mit einer Punktlichtquelle erzeugt werden. Des Weiteren können Mikrolinsen entsprechend dem Buchstaben-Zahlencode angeordnet sein. Die Verknüpfung von Seriennummern oder auch anderen Codes und OVDs 4a, 4b, 4c, 4d ist im Stand der Technik grundsätzlich bekannt.

Problematisch bei den OVDs 4a, 4b, 4c, 4d ist es, dass Fachleute zwar erkennen können, ob eine OVD 4a, 4b, 4c, 4d kopiert wurde oder nicht, für Laien und den normalen Käufer eines Produktes kann dieses mitunter, zumindest bei gut kopierten OVDs 4a, 4b, 4c, 4d, schwierig sein. Üblicherweise ist sich der Käufer nicht darüber im Klaren, wie die Authentizität der OVD 4a, 4b, 4c, 4d zu prüfen ist, also beispielsweise, in welchen Winkeln das optisch variable Element 4a, 4b, 4c, 4d bei Kippfarben in welcher Farbe erscheint, in welchen Winkeln bei einem Beugungsgitter oder einem Hologramm der zweite Code lesbar ist usw.

Darüber hinaus sind Reader für die verschiedensten maschinenlesbaren Elemente bekannt. Für QR-Codes gibt es QR-Code Reader, für 2D- und 1D-Barcodes gibt es die entsprechenden 1D- oder 2D-Barcode Reader.

Die Authentifizierung der Verpackungen 1a, 2a, 3a, 4a erfolgt mit Hilfe eines mobilen Endgeräts, beispielsweise eines Smartphones 20 gemäß Fig. 2, das über eine Kamera 21, ein Display 22 und eine Recheneinheit 23 verfügt. Die Kamera 21 wird über einen Barcode gehalten, und es wird ein Livestream des Barcodes erzeugt. Auf dem Smartphone 20 ist eine zugehörende Software, beispielsweise in Form einer App, installiert, die es ermöglicht, zunächst die Position, d. h. die relative Lage des maschinenlesbaren Elementes gegenüber dem Smartphone zu erkennen und dann nach dem Erkennen der Orientierung des maschinenlesbaren Elementes dieses zu entschlüsseln und eine entsprechende Information herauszulesen. Im vorliegenden Fall ist diese Information die erste Seriennummer, hier die in den Figuren 1a bis 1d dargestellten Zahlen 47 bis 50.

Erfindungsgemäß wird dem ersten Code ein zweiter Code zugeordnet, und diese Zuordnung kann auf verschiedene Weise geschehen. Beispielsweise kann eine Datenbank existieren, in der jedem ersten Code ein zweiter Code zugeordnet ist. Die Datenbank kann auf einem zentralen Server abgelegt sein oder auch im Speicher des Smartphones 20. Eine andere Möglichkeit besteht darin, dass der zweite Code kryptographisch aus dem ersten Code mittels entsprechender kryptographischer Algorithmen berechnet wird. Der kryptographische Algorithmus kann dafür ebenfalls auf dem Smartphone 20 oder einem zentralen Server abgelegt sein. Es ist auch denkbar, dass die Zuordnung des ersten Codes zum zweiten Code anderweitig erfolgt. Für den Fall, dass die Datenbank auf einem zentralen Server abgelegt ist, ist das Smartphone 20 internetfähig, verfügt also über Möglichkeiten zum Anschluss eines Internets, beispielsweise über eine WLAN Verbindung oder eine UMTS Verbindung oder andere Verbindungsmöglichkeiten.

Die Fig. 2 zeigt grundsätzlich den Livestream der ersten Verpackung 1a der Figur 1a.

Die Erfindung macht nun zusätzlich von der Idee Gebrauch, eine Augmented Reality (AR), also eine erweiterte Realität auf dem Display 22 des Smartphones 20 darzustellen. Grundsätzlich sind Augmented-Reality-Darstellungen im Stand der Technik beispielsweise durch die DE10 2014 108578 A1 bekannt. Bei einer Augmented-Reality-Anwendung wird im Prinzip ein Objekt im Livestream auf dem Display 22 des Smartphones 20 dargestellt, und dem gestreamten Objekt wird eine Animation überlagert, wobei die Animation relativ zu dem gestreamten Objekt ihre Position beibehält, also auch beim Drehen oder Kippen des Smartphones 20 die Bewegung, die das gestreamte Objekt gegenüber dem Smartphone 20 durchführt, mitmacht. In der Animation können weitere Informationen über das Objekt erscheinen.

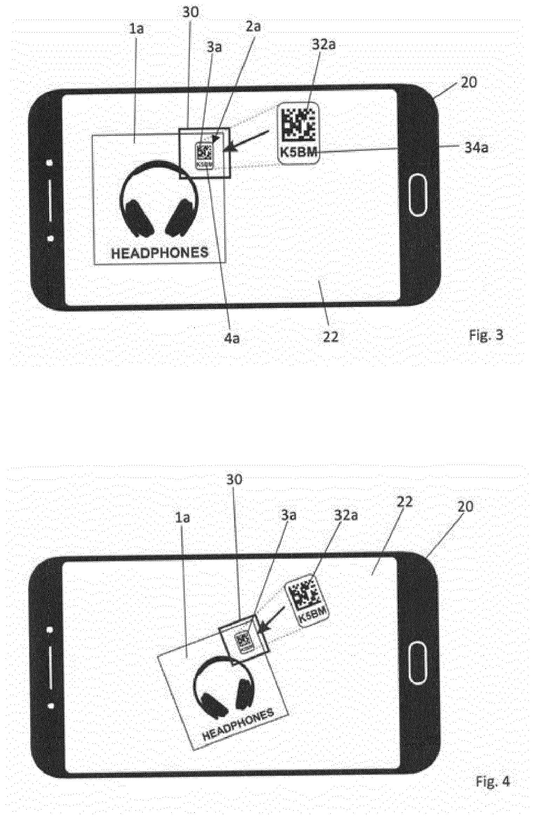

In der Fig. 3 ist die mit der Kamera 21 des Smartphones 20 gestreamte Verpackung 1a eines Kopfhörers von einer Animation überlagert. Die Animation umfasst einen quadratischen Kasten 30, der um das gestreamte Sicherheitsetikett 2a positioniert ist und seine Lage zur Verpackung 1a auch bei Veränderung der Lage des Smartphones 20 beibehält. Die Animation eines Sicherheitsetikettes 32a mit einem 2D-Barcode 33a und einem zweiten Code 34a sollte im Fall der Authentizität mit der gestreamten Version des Sicherheitsetikettes 2a übereinstimmen. Wenn der gestreamte zweite Code 4a und der zugeordnete zweite Code 34a nicht übereinstimmen, liegt vermutlich eine Fälschung vor.

Die erfindungsgemäße Smartphone App erfasst zunächst die Position des Sicherheitsetikettes 2a, indem es die Position des maschinenlesbaren Elementes 3a, in diesem Fall des 2D-Barcodes, erfasst. Der integrierte Barcode Reader ermittelt aus dem Barcode den ersten Code. Dem ersten Code wird durch die Datenbank der zweite Code zugeordnet 34a. Der zweite Code 34a erscheint dann in der Animation in Fig. 3 rechts unter dem 2D-Barcode 32a.

Die Augmented-Reality-Darstellung der gestreamten Verpackung 1a und des berechneten Sicherheitsetikettes 32a ermöglicht es dem Benutzer auf einfache Weise, das gestreamte Sicherheitsetikett 2a mit dem in der Datenbank abgelegten Sicherheitsetikett 32a zu vergleichen. Bei Abweichungen liegt der Verdacht einer gefälschten Verpackung 1a vor, bei Identität dürfte es sich um eine Originalverpackung handeln.

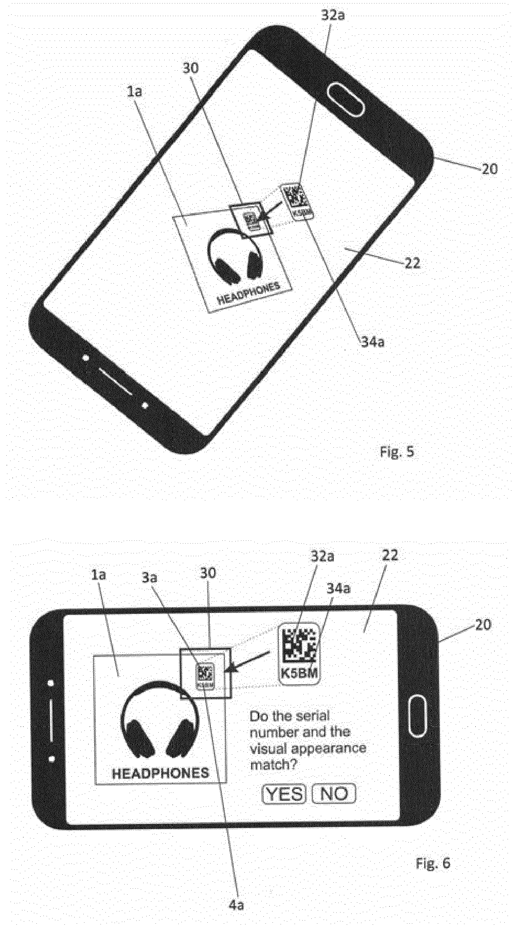

In den Fig. 4 und 5 ist die Augmented Reality der gestreamten Verpackung 1a des Kopfhörers noch anschaulicher dargestellt, da das Smartphone 20 in der Fig. 4 etwas gedreht ist und in der Fig. 5 zusätzlich gekippt ist. Der Benutzer hat in beiden Fällen den Eindruck, dass zum einen die Verpackung 1a entsprechend der von ihm verursachten Bewegung des Smartphones 20 in anderer Position auf dem Display 22 erscheint. Die Animation macht diese Bewegung in der Augmented Reality mit. Die Animation wirkt wie eine Erweiterung des tatsächlich gestreamten, also des realen Bildes der Kopfhörerverpackung 1a.

In Fig. 6 ist zusätzlich eine Abfrage als Teil der Augmented Reality implementiert. Die Abfrage wird über das Berühren eines Touchscreens auf dem Display 22 durchgeführt. Es sind natürlich auch andere Eingabemöglichkeiten denkbar. Vorzugsweise ist das Smartphone 20 mit dem Internet verbunden oder zumindest verbindbar, so dass die Antworten, die der Benutzer auf die Abfrage gibt, sofort oder zunächst gespeichert und dann nach Herstellung einer Internetverbindung an den Hersteller des Produktes übermittelt werden, der die Antworten sammelt und beispielsweise entsprechende Maßnahmen bei dem Vorliegen von gefälschten Verpackungen ergreift.

### Bezugszeichenliste

- 1a: Verpackung
- 1b: Verpackung
- 1c: Verpackung
- 1d: Verpackung
- 2a: Sicherheitsetikett
- 2b: Sicherheitsetikett
- 2c: Sicherheitsetikett
- 2d: Sicherheitsetikett
- 3a: maschinenlesbares Element
- 3b: maschinenlesbares Element
- 3c: maschinenlesbares Element
- 3d: maschinenlesbares Element
- 4a: optisch variables Element
- 4b: optisch variables Element
- 4c: optisch variables Element
- 4d: optisch variables Element

- 20: Smartphone
- 21: Kamera
- 22: Display
- 23: Recheneinheit

- 30: quadratischer Kasten

- 32a: animiertes Sicherheitsetikett
- 33: animierter 2D-Barcode
- 34a: animierter zweiter Code

## Patentansprüche

1. Authentifizierungsverfahren eines Sicherheitsmerkmals aus einer Serie von Sicherheitsmerkmalen mit jeweils einem maschinenlesbaren ersten Element (3a, 3b, 3c, 3d) mit einem ersten Code, der in der Serie von Sicherheitsmerkmalen jeweils einzigartig ist, und einem optisch variablen zweiten Element (4a, 4b, 4c, 4d) mit einem für einen Benutzer lesbaren zweiten Code, indem
ein mobiles Endgerät (20) mit einer Kamera (21), einem Bildschirm (22) und einer Recheneinheit (23) verwendet wird,
das maschinenlesbare erste Element (3a, 3b, 3c, 3d) mit der Kamera (21) des mobilen Endgeräts (20) erfasst wird,
die Recheneinheit (23) aus dem maschinenlesbaren ersten Element (3a, 3b, 3c, 3d) den ersten Code ermittelt und der erste Code einem zweiten Code zugeordnet wird,
auf dem Bildschirm (22) eine Animation des zugeordneten zweiten Codes (34a) in einer Augmented Reality des Sicherheitsmerkmals dargestellt wird und der zugeordnete zweite Code (34a) mit dem lesbaren zweiten Code verglichen wird und dadurch die Authentizität des Sicherheitsmerkmals ermittelt wird.

2. Authentifizierungsverfahren nach Anspruch 1,
**dadurch gekennzeichnet, dass** der zweite Code in der Serie vielfältig gewählt wird oder dass der zweite Code in der Serie einzigartig gewählt ist.

3. Authentifizierungsverfahren nach Anspruch 1,
**dadurch gekennzeichnet, dass** auf dem Bildschirm (22) ein Livestream des Sicherheitsmerkmals erzeugt wird und eine Relativposition des optisch variablen Elementes (4a, 4b, 4c, 4d) gegenüber dem mobilen Endgerät (20) durch die Relativposition des maschinenlesbaren Elementes (3a, 3b, 3c, 3d) gegenüber dem mobilen Endgerät (20) ermittelt wird und die Relativposition zur Darstellung der Augmented Reality verwendet wird.

4. Authentifizierungsverfahren nach Anspruch 1 oder 2,
**dadurch gekennzeichnet, dass** das mobile Endgerät (20) eine Eingabeeinrichtung aufweist, mit der eine Identität des lesbaren zweiten Codes mit dem zugeordneten zweiten Code bejaht oder verneint werden kann.

5. Authentifizierungsverfahren nach einem der vorstehenden Ansprüche,
**dadurch gekennzeichnet, dass** die ersten und zweiten Codes in einer Datenbank abgelegt und einander zugeordnet werden und die Recheneinheit (23) auf die Daten der Datenbank zugreift.

6. Authentifizierungsverfahren nach einem der vorstehenden Ansprüche,
**dadurch gekennzeichnet, dass** das optisch variable zweite Element (4a, 4b, 4c, 4d) ein Hologramm oder Mikrolinsen oder eine Kippfarbe enthält.

7. Authentifizierungsverfahren nach einem der vorstehenden Ansprüche,
**dadurch gekennzeichnet, dass** in das optisch variable zweite Element (4a, 4b, 4c, 4d) Beugungsgitter in Form des zweiten Codes eingeformt werden und/oder dass in das optische variable zweite Element (4a, 4b, 4c, 4d) Hologramme in Form des zweiten Codes eingeformt werden.

8. Authentifizierungsverfahren nach einem der vorstehenden Ansprüche,
**dadurch gekennzeichnet, dass** das optisch variable zweite Element (4a, 4b, 4c, 4d) in einem laserlithographischen Verfahren mit einer Auflösung von mindestens 1.200 dpi erzeugt wird.

9. Authentifizierungsverfahren nach einem der vorstehenden Ansprüche,
**dadurch gekennzeichnet, dass** eine Lichtquelle am mobilen Endgerät (20) angeordnet wird und die Lichtquelle zur Beleuchtung des lesbaren zweiten Codes eingeschaltet wird, wobei der zweite Code bei diffuser Beleuchtung nicht gelesen werden kann und bei angeschalteter Lichtquelle des Endgeräts gelesen werden kann und/oder dass der zweite Code in Form eines computergenerierten Fourier- oder Fresnelhologramms hergestellt wird.

10. Authentifizierungsverfahren nach einem der vorstehenden Ansprüche,
**dadurch gekennzeichnet, dass** die Animation des zugeordneten zweiten Codes (34a) in der Augmented Reality bei dem erfassten lesbaren zweiten Code dargestellt wird.

11. Authentifizierungsverfahren nach einem der vorstehenden Ansprüche,
**dadurch gekennzeichnet, dass** das Sicherheitsmerkmal als Sicherheitsetikett ausgebildet wird.

12. Authentifizierungsverfahren nach einem der vorstehenden Ansprüche,
**dadurch gekennzeichnet, dass** das Endgerät mittels der Kamera (21) eine Beleuchtungssituation einer Umgebung ermittelt, um die Animation an die Beleuchtungssituation der Umgebung anzupassen.

13. Authentifizierungsverfahren nach einem der vorstehenden Ansprüche,
**dadurch gekennzeichnet, dass** die Animation abhängig von einem Betrachtungswinkel zwischen Endgerät und optisch variablem Element dargestellt wird.

14. Authentifizierungsverfahren nach einem der vorstehenden Ansprüche,
**dadurch gekennzeichnet, dass** das Ergebnis der Authentifizierung in der Augmented Reality dargestellt wird, wobei in der Augmented Reality produktspezifische Informationen und/oder Bonusprogramme und/oder Gewinnspiele dargestellt werden, wobei die Informationen, Bonusprogramme und/oder Gewinnspiele abhängig von der individuellen Seriennummer des Produkts ausgestaltet werden.

15. Authentifizierungsverfahren nach einem der vorstehenden Ansprüche, **dadurch gekennzeichnet, dass** der erste Code ein Barcode ist.

## Claims

1. Authentication method of a security feature consisting of a series of security features respectively having a machine-readable first element (3a, 3b, 3c, 3d) having a first code which is unique in the series of security features, and an optically variable second element (4a, 4b, 4c, 4d) having a second code readable for a user, in which a mobile terminal (20) having a camera (21), a screen (22) and a computing unit (23) is used,
the machine-readable first element (3a, 3b, 3c, 3d) is recorded with the camera (21) of the mobile terminal (20),
the computing unit (23) determines the first code from the machine-readable first element (3a, 3b, 3c, 3d) and the first code is assigned to a second code,
on the screen (22), an animation of the assigned second code (34a) is represented in an Augmented Reality of the security feature and the assigned second code (34a) is compared to the readable second code and thereby the authenticity of the security feature is determined.

2. Authentication method according to claim 1,
**characterised in that** the second code in the series is selected as one of many, or the second code in the series is uniquely selected.

3. Authentication method according to claim 1,
**characterised in that** a livestream of the security feature is generated on the screen (22) and a relative position of the optically variable element (4a, 4b, 4c, 4d) compared to the mobile terminal (20) is determined via the relative position of the machine-readable element (3a, 3b, 3c, 3d) compared to the mobile terminal (20) and the relative position is used for the representation of the Augmented Reality.

4. Authentication method according to claim 1 or 2,
**characterised in that** the mobile terminal (20) has an input device, with which an identity of the readable second code can be affirmed or denied with the assigned second code.

5. Authentication method according to one of the preceding claims,
**characterised in that** the first and second codes are stored in a database and are assigned to each other, and the computing unit (23) accesses the data of the database.

6. Authentication method according to one of the preceding claims,
**characterised in that** the optically variable second element (4a, 4b, 4c, 4d) contains a hologram or micro lenses or a colour-shifting ink.

7. Authentication method according to one of the preceding claims,
**characterised in that** diffraction gratings in the form of the second code are moulded into the optically variable second element (4a, 4b, 4c, 4d) and/or holograms in the form of the second code are moulded into the optically variable second element (4a, 4b, 4c, 4d).

8. Authentication method according to one of the preceding claims,
**characterised in that** the optically variable second element (4a, 4b, 4c, 4d) is generated in a laser lithographic method with a resolution of at least 1,200 dpi.

9. Authentication method according to one of the preceding claims,
**characterised in that** a light source is arranged on the mobile terminal (20) and the light source is activated to illuminate the readable second code, wherein the second code cannot be read under diffuse illumination and can be read with an activated light source of the terminal, and/or the second code is produced in the form of a computer-generated Fourier or Fresnel hologram.

10. Authentication method according to one of the preceding claims,
**characterised in that** the animation of the assigned second code (34a) is represented in the Augmented Reality with the recorded readable second code.

11. Authentication method according to one of the preceding claims,
**characterised in that** the security feature is formed as a security tag.

12. Authentication method according to one of the preceding claims,
**characterised in that** the terminal determines an illumination situation of an environment by means of the camera (21) in order to adjust the animation to the illumination situation of the environment.

13. Authentication method according to one of the preceding claims,
**characterised in that** the animation is represented depending on a viewing angle between terminal and optically variable element.

14. Authentication method according to one of the preceding claims,
**characterised in that** the result of the authentication is represented in the Augmented Reality, wherein product-specific pieces of information and/or bonus programmes and/or competitions are represented in the Augmented Reality, wherein the pieces of information, bonus programmes and/or competitions are designed depending on the individual serial number of the product.

15. Authentication method according to one of the preceding claims,
**characterised in that** the first code is a barcode.

## Revendications

1. Procédé d'authentification d'une caractéristique de sécurité à partir d'une série de caractéristiques de sécurité avec respectivement un premier élément lisible par machine (3a, 3b, 3c, 3d) avec un premier code, qui est unique respectivement dans la série de caractéristiques de sécurité, et un deuxième élément optiquement variable (4a, 4b, 4c, 4d) avec un deuxième code lisible par un utilisateur, en ce que
un appareil terminal mobile (20) avec une caméra (21), un écran (22) et une unité de calcul (23) est utilisé,
le premier élément lisible par machine (3a, 3b, 3c, 3d) est détecté avec la caméra (21) de l'appareil terminal mobile (20),
l'unité de calcul (23) détermine à partir du premier élément lisible par machine (3a, 3b, 3c, 3d) le premier code, et le premier code est associé à un deuxième code,
une animation du deuxième code (34a) associé est représentée sur l'écran (22) dans une réalité augmentée de la caractéristique de sécurité et le deuxième code (34a) associé est comparé au deuxième code lisible et l'authenticité de la caractéristique de sécurité est ainsi déterminée.

2. Procédé d'authentification selon la revendication 1,
**caractérisé en ce que** le deuxième code est choisi dans la série de manière polyvalente, ou que le deuxième code est choisi dans la série de manière unique.

3. Procédé d'authentification selon la revendication 1,
**caractérisé en ce qu'**un flux live de la caractéristique de sécurité est généré sur l'écran (22) et une position relative de l'élément optiquement variable (4a, 4b, 4c, 4d) par rapport à l'appareil terminal mobile (20) est déterminée par la position relative de l'élément lisible par machine (3a, 3b, 3c, 3d) par rapport à l'appareil terminal mobile (20) et la position relative est utilisée pour représenter la réalité augmentée.

4. Procédé d'authentification selon la revendication 1 ou 2,
**caractérisé en ce que** l'appareil terminal mobile (20) présente un dispositif d'entrée, avec lequel une identité du deuxième code lisible peut être confirmée ou infirmée avec le deuxième code associé.

5. Procédé d'authentification selon l'une quelconque des revendications précédentes,
**caractérisé en ce que** les premier et deuxième codes sont sauvegardés dans une base de données et sont associés les uns aux autres et l'unité de calcul (23) a recours aux données de la base de données.

6. Procédé d'authentification selon l'une quelconque des revendications précédentes, **caractérisé en ce que** le deuxième élément optiquement variable (4a, 4b, 4c, 4d) contient un hologramme ou des microlentilles ou une encre de changement de couleur.

7. Procédé d'authentification selon l'une quelconque des revendications précédentes,
**caractérisé en ce que** des réseaux de diffraction sont formés sous la forme du deuxième code dans le deuxième élément optiquement variable (4a, 4b, 4c, 4d), et/ou des hologrammes sont formés sous la forme du deuxième code dans le deuxième élément optiquement variable (4a, 4b, 4c, 4d).

8. Procédé d'authentification selon l'une quelconque des revendications précédentes, **caractérisé en ce que** le deuxième élément optiquement variable (4a, 4b, 4c, 4d) est généré dans un procédé de lithographie laser avec une résolution d'au moins 1200 dpi.

9. Procédé d'authentification selon l'une quelconque des revendications précédentes,
**caractérisé en ce qu'**une source de lumière est disposée sur l'appareil terminal mobile (20) et la source de lumière est activée pour éclairer le deuxième code lisible, dans lequel le deuxième code ne peut être lu lors d'un éclairage diffus et peut être lu lorsque la source de lumière de l'appareil terminal est allumée, et/ou que le deuxième code est fabriqué sous la forme d'un hologramme de Fourier et de Fresnel généré par ordinateur.

10. Procédé d'authentification selon l'une quelconque des revendications précédentes, **caractérisé en ce que** l'animation du deuxième code (34a) associé est représenté pour le deuxième code lisible détecté dans la réalité augmentée.

11. Procédé d'authentification selon l'une quelconque des revendications précédentes,
**caractérisé en ce que** la caractéristique de sécurité est réalisée en tant qu'étiquette de sécurité.

12. Procédé d'authentification selon l'une quelconque des revendications précédentes,
**caractérisé en ce que** l'appareil terminal détermine au moyen de la caméra (21) une situation d'éclairage d'un environnement pour adapter l'animation à la situation d'éclairage de l'environnement.

13. Procédé d'authentification selon l'une quelconque des revendications précédentes, **caractérisé en ce que** l'animation est représentée en fonction d'un angle d'observation entre l'appareil terminal et l'élément optiquement variable.

14. Procédé d'authentification selon l'une quelconque des revendications précédentes,
**caractérisé en ce que** le résultat de l'authentification est représenté dans la réalité augmentée, dans lequel des informations spécifiques au produit et/ou des programmes bonus et/ou des jeux de loterie sont représentés dans la réalité augmentée, dans lequel les informations, les programmes bonus et/ou les jeux de loterie sont configurés en fonction du numéro de série individuel du produit.

15. Procédé d'authentification selon l'une quelconque des revendications précédentes,
**caractérisé en ce que** le premier code est un code à barres.
